# EUROPEAN PATENT SPECIFICATION

(11) **EP 3 319 032 B1**
(45) Date of publication and mention of the grant of the patent: **05.03.2025**
(21) Application number: 16836575.7
(22) Date of filing: 09.08.2016
(51) Int. Cl.: G06Q 20/38, G06Q 20/16, G06Q 20/32, H04B 5/00

(54) **METHOD FOR PROCESSING DATA, WEARABLE ELECTRONIC EQUIPMENT AND SYSTEM**
VERFAHREN ZUR DATENVERARBEITUNG, ELEKTRONISCHE WEARABLE-AUSRÜSTUNG UND SYSTEM
PROCÉDÉ POUR TRAITER DES DONNÉES, ÉQUIPEMENT ÉLECTRONIQUE POUVANT ÊTRE PORTÉ ET SYSTÈME

(30) Priority: 14.08.2015 CN 201510502465
(43) Date of publication of application: 09.05.2018
(73) Proprietor: Huawei Technologies Co., Ltd., Longgang District Shenzhen, Guangdong 518129 (CN)
(72) Inventor: WANG, Zi, Shenzhen Guangdong 518129 (CN)
(74) Representative: Pfenning, Meinig & Partner mbB
(86) International application number: PCT/CN2016/094157
(87) International publication number: WO 2017/028711

(56) References cited:
- WO-A1-2015/096645
- CN-A- 101 739 622
- CN-A- 102 402 820
- CN-A- 102 982 445
- CN-A- 104 143 065
- CN-A- 104 156 657
- US-A1- 2013 054 473

## Description

### TECHNICAL FIELD

The present invention relates to the field of communications technologies, and in particular, to a data processing method and system, a wearable electronic device, a computer-readable storage medium and a computer program product.

### BACKGROUND

With development of intelligent terminals, online transaction by using an intelligent terminal becomes popular. An existing technical solution for completing online payment is based on a user name/password or SMS message mechanism. The user name/password or SMS message mechanism is easily attacked by a payment virus, and the payment virus may read a user SMS message. The "user SMS message" herein includes a verification code for a payment transaction of a user. The payment virus may further embed malicious code into a payment application in a re-packaging manner. Consequently, software can be downloaded and installed without permission of the user, and a malicious sub package may also be installed to further steal a bank account and password of the user and steal funds in the account of the user. This greatly threatens payment security of a payment client on an intelligent terminal.

Therefore, a security problem of online payment performed by a user by using an intelligent terminal needs to be urgently resolved.

US 2013/054473 A1 discloses a secure payment method, a mobile device and a secure payment system. The secure payment method including steps of: transmitting an encrypted payment request packet from a payment service provider to a mobile device; receiving the encrypted payment request packet by a first operating system running within a normal domain of the mobile device; bypassing the encrypted payment request packet to a second operating system running within a secured domain on the mobile device; decrypting payment request data from the encrypted payment request packet under the secured domain; generating payment response data according to the payment request data under the secured domain; encrypting the payment response data into an encrypted payment response packet under the secured domain; bypassing the encrypted payment response packet to the first operating system under the normal domain; and, transmitting the encrypted payment response packet to the payment service provider.

### SUMMARY

In order to solve the above mentioned problem, the present invention provides a wearable electronic device according to claim 1, a data processing method according to claim 5, and a data processing system according to claim 9, so as to resolve a security problem of online payment performed by a user by using an intelligent terminal.

According to a first aspect, an embodiment of the present invention provides a wearable electronic device, where the wearable electronic device includes: a processor, a memory, a communications unit, an input unit, and a data processing unit. The memory is configured to store software programs and modules of a first operating system and a second operating system. The processor is configured to switch the first operating system to the second operating system according to a first operation instruction that is entered by a user and received by the input unit. The communications unit is configured to receive, by using a first application supported by the second operating system, first information sent by an intelligent terminal, where the first information includes transaction data for completing online payment. The processor is further configured to determine, according to a second operation instruction that is entered by the user and received by the input unit, that the first information received by the communications unit is correct. The data processing unit is configured to perform, by using the second operating system, encryption or signature processing on the first information that is determined to be correct by the processor, to obtain second information. The communications unit is further configured to send, to the intelligent terminal by using the first application, the second information obtained by the data processing unit.

With reference to the first aspect, in a first possible implementation of the first aspect, the input unit is further configured to receive the second operation instruction entered by the user, and the second operation instruction is used to indicate that the first information is correct.

With reference to the first aspect, the communications unit is further configured to establish a communication connection to the intelligent terminal in a wireless access mode, after the first operating system is switched to the second operating system; the processor is further configured to determine, according to a service request instruction that is sent by the intelligent terminal and received by the communications unit, to run the first application supported by the second operating system; and the communications unit is further configured to send, to the intelligent terminal, a response message indicating that the first application has already been run.

With reference to any one of the foregoing possible implementations, in a third possible implementation of the first aspect, the input unit is further configured to receive the first operation instruction entered by the user, and the first operation instruction is used to switch the first operating system to the second operating system.

With reference to any one of the foregoing possible implementations, in a fourth possible implementation of the first aspect, the first operation instruction and the second operation instruction are any one type of: voice instructions, fingerprint instructions, or keyboard instructions.

According to a second aspect, an embodiment of the present invention provides a data processing method, where the method includes: switching a first operating system to a second operating system according to a received first operation instruction that is entered by a user; receiving, by using a first application supported by the second operating system, first information sent by an intelligent terminal, where the first information includes transaction data for completing online payment; determining, according to a received second operation instruction that is entered by the user, that the first information is correct; performing encryption or signature processing on the first information by using the second operating system, to obtain second information; and sending the second information to the intelligent terminal by using the first application.

With reference to the second aspect, in a first possible implementation of the second aspect, before the determining, according to a received second operation instruction that is entered by the user, that the first information is correct, the method further includes: receiving the second operation instruction, where the second operation instruction is used to indicate that the first information is correct.

With reference to the second aspect, before the receiving, by using a first application supported by the second operating system, first information sent by an intelligent terminal, the method further includes: establishing a communication connection to the intelligent terminal in a wireless access mode; determining, according to a service request instruction sent by the intelligent terminal, to run the first application supported by the second operating system; and sending, to the intelligent terminal, a response message indicating that the first application has already been run.

With reference to any one of the foregoing possible implementations, in a third possible implementation of the second aspect, before the switching a first operating system to a second operating system according to a received first operation instruction that is entered by a user, the method further includes: receiving the first operation instruction entered by the user, where the first operation instruction is used to switch the first operating system to the second operating system.

With reference to any one of the foregoing possible implementations, in a fourth possible implementation of the second aspect, the first operation instruction and the second operation instruction are any one type of: voice instructions, fingerprint instructions, or keyboard instructions.

According to a third aspect, an embodiment of the present invention provides a data processing system, where the system includes an intelligent terminal and a wearable electronic device. The intelligent terminal is configured to send first information to the wearable electronic device, where the first information includes transaction data for completing online payment. The wearable electronic device is configured to: switch the first operating system to the second operating system according to a received first operation instruction that is entered by a user; receive, by using a first application supported by the second operating system, the first information sent by the intelligent terminal; when determining that the first information is correct, perform encryption or signature processing on the first information, to obtain second information; and send the second information to the intelligent terminal.

With reference to the third aspect, the intelligent terminal is further configured to: establish a communication connection to the wearable electronic device in a wireless access mode, after the first operating system is switched to the second operating system, and send a service request instruction to the wearable electronic device, where the service request instruction is used to instruct the wearable electronic device to determine to run the first application supported by the second operating system; and the wearable electronic device is further configured to: receive the service request instruction; determine, according to the service request instruction, to run the first application supported by the second operating system; and send, to the intelligent terminal, a response message indicating that the first application has already been run.

With reference to the third aspect or the first possible implementation of the third aspect, in a second possible implementation of the third aspect, the wearable electronic device is further configured to: receive a second operation instruction entered by the user, and determine, according to the second operation instruction, that the first information is correct, where the second operation instruction is used to indicate that the first information is correct.

With reference to any one of the foregoing possible implementations, in a third possible implementation of the third aspect, the first operation instruction and the second operation instruction are any one type of: voice instructions, fingerprint instructions, or keyboard instructions.

Based on the foregoing technical solutions, according to the wearable electronic device, and the data processing method and system that are provided in the embodiments of the present invention, encryption or signature processing is performed, by using a second operating system, on first information that is used to complete online payment and sent by an intelligent terminal, to obtain second information, and the second information is fed back to the intelligent terminal, so that the intelligent terminal obtains the second information to complete the online payment, thereby resolving a security problem of online payment performed by a user by using an intelligent terminal.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG 1 is a schematic block diagram of a wearable electronic device according to an embodiment of the present invention;
FIG 2 is a schematic flowchart of a data processing method according to an embodiment of the present invention;
FIG 3 is a schematic flowchart of a data processing method according to another embodiment of the present invention;
FIG 4 is a schematic flowchart of a data processing method according to still another embodiment of the present invention;
FIG 5 is a schematic flowchart of a data processing method according to still another embodiment of the present invention;
FIG 6 is a schematic interaction diagram of a data processing method according to still another embodiment of the present invention; and
FIG 7 is a schematic block diagram of a data processing system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some rather than all of the embodiments of the present invention. All other embodiments obtained by a person of ordinary skill in the art based on the embodiments of the present invention without creative efforts shall fall within the protection scope of the present invention.

It should be understood that, in the embodiments of the present invention, an intelligent terminal may be a device such as a smartphone or a tablet computer. The embodiments of the present invention set no limitation thereto.

It should further be understood that, in the embodiments of the present invention, a wearable electronic device is an intelligently designed device that is worn by a user, for example, intelligently designed clothes or accessories. Specifically, in the embodiments of the present invention, the wearable electronic device may be a device such as a smart band, a smart watch, or smart glasses. The embodiments of the present invention set no limitation thereto.

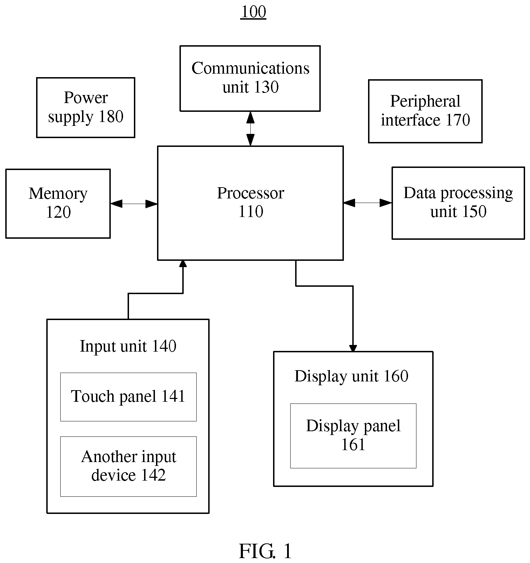

FIG 1 is a schematic block diagram of a wearable electronic device 100 according to an embodiment of the present invention. The wearable electronic device 100 shown in FIG 1 includes: a processor 110, a memory 120, a communications unit 130, an input unit 140, and a data processing unit 150.

The memory 120 is configured to store software programs and modules of a first operating system and a second operating system.

The processor 110 is configured to switch the first operating system to the second operating system according to a first operation instruction that is entered by a user and received by the input unit 140.

The communications unit 130 is configured to receive, by using a first application supported by the second operating system, first information sent by an intelligent terminal, where the first information includes transaction data for completing online payment.

The processor 110 is further configured to determine, according to a second operation instruction that is entered by the user and received by the input unit 140, that the first information received by the communications unit 130 is correct.

The data processing unit 150 is configured to perform, by using the second operating system, encryption or signature processing on the first information that is determined to be correct by the processor 110, to obtain second information.

The communications unit 130 is further configured to send, to the intelligent terminal by using the first application, the second information obtained by the data processing unit 150.

Specifically, in this embodiment of the present invention, the processor 110 of the wearable electronic device 100 switches, according to the first operation instruction that is entered by the user and received by the input unit 140, the frequently used first operating system such as an Android system that is stored in the memory 120 to the second operating system that has a security feature and that is stored in the memory 120, and determines, according to the second operation instruction received by the input unit 140, that the first information that is sent by the intelligent terminal and received by the communications unit 130 by using the first application supported by the second operating system is correct. The first information includes the transaction data for completing online payment. The data processing unit 150 performs, by using the second operating system, encryption or signature processing on the first information that is determined to be correct by the processor 110, to obtain the second information. The communications unit 130 sends, to the intelligent terminal by using the first application supported by the second operating system, the second information obtained by the data processing unit 150, so that the intelligent terminal obtains the second information to complete online payment.

Therefore, the wearable electronic device provided in this embodiment of the present invention performs, by using a second operating system, encryption or signature processing on first information that is used to complete online payment and sent by an intelligent terminal, to obtain second information, and feeds back the second information to the intelligent terminal, so that the intelligent terminal obtains the second information to complete the online payment, thereby resolving a security problem of online payment performed by a user by using an intelligent terminal.

It should be understood that, in this embodiment of the present invention, the security feature of the second operating system is embodied as follows: First, a startup process of the second operating system is secure, that is, step-by-step signature authentication is required during each time of startup, to ensure that the system is not tampered; second, the second operating system has a strict software entry, and a software source of the second operating system is strictly controlled by means of software auditing and code signing, to ensure that no malicious software enters; thirdly, the second operating system provides limited functions and occupies quite small memory space, and therefore, a vulnerability possibility is greatly reduced; fourthly, the second operating system does not run when the first operating system (for example, the frequently used Android system) is running, to ensure that the second operating system suffers no security attack from the first operating system; and fifthly, only this operating system provides an interface for accessing the data processing unit 150, for example, the second operating system may be a simple graphics system.

It should be noted that, in this embodiment of the present invention, the wearable electronic device 100 shown in FIG 1 further includes components such as a display unit 160, a peripheral interface 170, and a power supply 180. The components shown in FIG 1 may communicate with each other by using one or more buses. A person skilled in the art may understand that a structure of the wearable electronic device 100 shown in FIG 1 does not constitute a limitation on the present invention. The structure may be a bus structure, or may be a star structure. The wearable electronic device 100 may further include more or fewer components than those shown in the figure, or combine some components, or have different component arrangements.

It should further be noted that the wearable electronic device 100 provided in this embodiment is merely an example, and the wearable electronic device 100 involved in this embodiment of the present invention may have more or fewer components than those shown in FIG 1, may combine two or more components, or may have different component configurations or settings. Each component may be implemented in hardware, software, or a combination of hardware and software that includes one or more signal processors and/or application-specific integrated circuits.

The following specifically describes all components that are included in the wearable electronic device 100 shown in FIG 1.

The processor 110 is used as a control center of the wearable electronic device, may connect to the components of the entire electronic device by using various interfaces and lines, and execute various functions of the electronic device and/or process data by running or executing a software program and/or a module stored in the memory 120 and by invoking data stored in the memory 120.

The processor 110 may include an integrated circuit (Integrated Circuit, IC), for example, may include a single packaged IC, or may include multiple packaged ICs having a same function or different functions.

In this embodiment of the present invention, the processor 110 may include a central processing unit (Central Processing Unit, CPU), or may include a combination of a graphics processing unit (Graphic Processing Unit, GPU), a digital signal processor (Digital Signal Processor, DSP), and a control chip (for example, a baseband chip) or a field programmable gate array (Field Programmable Gate Array, FPGA) chip in the communications unit. In this embodiment of the present invention, the CPU may include a single computing core, or may include multiple computing cores. This embodiment of the present invention sets no limitation thereto.

The memory 120 may be configured to store a software program and a module, and the processor 110 executes various function applications of the wearable electronic device 100 and processes data by running the software program and the module that are stored in the memory 120. Specifically, in this embodiment of the present invention, the memory 120 may store two operating systems, a first operating system is a frequently used operating system (for example, the Android system), and a second operating system is a simplified operating system (for example, a simplified graphics system). The two operating systems cannot be run at the same time, and need to be switched by using a switch (an element in the input unit). When payment is required, the user needs to actively switch the first operating system to the second operating system.

The memory 120 mainly includes a program storage area and a data storage area. The program storage area may store an operating system and an application program required by at least one function, for example, a sound playing program or an image playing program. The data storage area may store data (for example, audio data or a phone book) and the like that are created according to use of the electronic device.

In this embodiment of the present invention, the memory 120 may include a volatile memory such as a nonvolatile random access memory (Nonvolatile Random Access Memory, NVRAM), a phase change random access memory (Phase Change RAM, PRAM), and a magnetoresistive random access memory (Magnetoresistive RAM, MRAM), or may include a nonvolatile memory such as at least one magnetic disk storage device, an electrically erasable programmable read-only memory (Electrically Erasable Programmable Read-Only Memory, EEPROM), and a flash storage device, for example, a NOR flash memory (NOR flash memory) or a NAND flash memory (NAND flash memory).

The communications unit 130 may be configured to establish a communication channel, so that the wearable electronic device 100 connects to a remote server or an intelligent terminal (for example, a mobile phone or a tablet computer) by using the communication channel, sends data to the remote server or the intelligent terminal, and receives data from the remote server or the intelligent terminal.

In this embodiment of the present invention, the communications unit 130 may include a module used for wireless communication such as a wireless local area network (Wireless Local Area Network, WLAN) module, a Bluetooth module, a near field communication (Near Field Communication, NFC) module, or a baseband module, and a radio frequency (Radio Frequency, RF) circuit that corresponds to the communications unit and that is used for wireless local area network communication, Bluetooth communication, infrared communication, and/or cellular communications system communication.

The input unit 140 may be configured to implement interaction between the user and the wearable electronic device 100 and/or input of information entered by the user into the wearable electronic device 100. For example, the input unit 140 may receive digit or character information that is entered by the user, to generate signal input related to user settings or function control.

Specifically, in this embodiment of the present invention, the input unit 140 may include a touch panel 141 and another input device 142. The touch panel 141 is also referred to as a touchscreen, may collect a touch operation (for example, an operation of the user on the touch panel 141 or near the touch panel 141 by using any proper object or accessory such as a finger or a stylus) of the user on or near the touch panel 141, and drive a corresponding connecting apparatus according to a preset program.

Optionally, the touch panel 141 may include two parts: a touch detection apparatus and a touch controller. The touch detection apparatus detects a touch position of the user, detects a signal brought by a touch operation, and transmits the signal to the touch controller. The touch controller receives touch information from the touch detection apparatus, converts the touch information into coordinates of a touch point, then sends the coordinates of the touch point to the processor 110, and may receive and execute a command sent by the processor 110. In addition, the touch panel 141 may be of multiple types such as a resistance type, a capacitance type, an infrared type, or a surface acoustic wave type.

In addition to the touch panel 141, the input unit 140 may further include the another input device 142. Specifically, the another input device 142 may include but is not limited to one or more of a physical keyboard, a function key (for example, a volume control key or an on/off key), a trackball, a mouse, a joystick, or the like.

The data processing unit 150 may implement sensitive data storage and secure computing. The data processing unit 150 has a built-in CPU, memory (SRAM or Flash), and chip operating system (COS), and may store a key or a digital certificate of the user. In addition, the data processing unit has a built-in algorithm engine, including a public key algorithm engine, a symmetric algorithm engine, a hash algorithm engine, and a random number generator, to implement data encryption or signature processing.

The public key algorithm engine is configured to implement public key encryption, and the public key encryption refers to using a private key that needs to be private to an unauthorized user and a public key that may be public to any user. The public key is associated with the private key, and both the two keys are unique for a communication session. Data encrypted by using the public key may be decrypted only by using the private key, and data signed by using the private key may be authenticated only by using the public key. Because data needs to be encrypted by using a key and needs to be decrypted by using another key, a public key encryption algorithm is also referred to as an asymmetric algorithm.

The symmetric algorithm engine is configured to implement symmetric encryption, and a symmetric encryption algorithm refers to using a single private key to encrypt and decrypt data. Because any one having the key may decrypt the data by using the key, it is necessary to prevent the key from being obtained by an unauthorized agent. Because a same key is used for both encryption and decryption, the symmetric encryption algorithm is also referred to as a private key encryption algorithm.

The hash algorithm engine is configured to implement hash function encryption, and a hash function is sometimes also referred to as a message-digest function, a hash function, or a hash function. In a process of hash function encryption, a key is not necessarily used, but many crypto algorithms are involved. Input data may be output as a hash value with a relatively short fixed length. This process is unidirectional, and a reverse operation is difficult to complete. In addition, a probability of generating a same hash value for two different inputs is quite small.

The random number generator is configured to generate a random number, and may generate a random encryption key during an encryption operation, so that the generated key hardly reappears. This is conducive to security of data transmission.

In this embodiment of the present invention, the data processing unit 150 may further support a security interface such as a 7816 interface or a serial peripheral interface (Serial Peripheral Interface, SPI), and may also support a chip-level security detection and protection mechanism.

Specifically, in this embodiment of the present invention, the data processing unit 150 may store unique key information, to ensure that only information that is processed by using a key stored in the data processing unit 150 may be accepted by a payment organization. The data processing unit 150 may store a corresponding certificate and key of the user in the payment organization, and the certificate of the user is also stored on a platform side of the payment organization, so that it may be ensured, by using a unique correspondence between the certificate and the key, that a transaction is completed by an entity (the wearable electronic device 100) having the key. That is, the data processing unit 150 may store a key (a certificate) related to payment, bank card information, and the like, and the key may totally be randomly generated in the data processing unit 150 and stored in the data processing unit 150, so as to ensure that the key is not exported from the data processing unit 150. Because the data processing unit 150 stores the corresponding certificate and a private key corresponding to the certificate that are of the user in the payment organization, and the private key cannot be exported, only data that is encrypted or signed by using the private key may be authenticated on a server (the payment organization is on a platform side of the server), so as to ensure that the transaction may be completed only when the data processing unit 150 is used.

The wearable electronic device 100 further includes the display unit 160 that may be configured to display information entered by the user, information provided for the user, and various menus of the wearable electronic device 100. The display unit 160 may include a display panel 161, and optionally, the display panel 161 may be configured in a form of an LCD (Liquid Crystal Display, liquid crystal display), an OLED (Organic Light-Emitting Diode, organic light-emitting diode), or the like.

Further, the touch panel 141 may cover the display panel 161. When detecting a touch operation on or near the touch panel 141, the touch panel 141 transmits the touch operation to the processor 110, to determine a type of a touch event, and then the processor 110 provides corresponding visual output on the display panel 161 according to the type of the touch event.

Although the touch panel 141 and the display panel 161 in FIG 1 are used as two independent components to implement input and output functions of the wearable electronic device 100, in some embodiments, the touch panel 141 and the display panel 161 may be integrated to implement the input and output functions of the wearable electronic device 100.

The wearable electronic device 100 further includes the peripheral interface 170, which is an interface that may be configured to connect an external device and the wearable electronic device 100. The external device includes but is not limited to one or more of a keyboard, a mouse, a touchpad, a trackball, a joystick, a game controller, a microphone, a display, a sound box, a power amplifier, or the like. The external device connects to the processor 110 of the wearable electronic device 100 by using the peripheral interface 170, and inputs data (for example, digit or character information) into the processor 100 for processing, or reads data from the processor 100 and outputs the data to the external device by using the peripheral interface 170.

In this embodiment of the present invention, the peripheral interface 170 includes but is not limited to a universal serial bus (Universal Serial Bus, USB) interface, a mini-USB interface, a peripheral component interconnect (Peripheral Component Interconnect, PCI) interface, an IEEE 1394 interface, a video graphics array (Video Graphics Array, VGA) interface, a high definition multimedia interface (High Definition Multimedia Interface, HDMI), and the like, or is any one or combination of the foregoing interfaces.

The wearable electronic device 100 further includes the power supply 180 that is configured to supply power to the different components of the wearable electronic device 100, to maintain operation of the components. Generally, the power supply 180 may be a built-in battery such as a common lithium-ion battery or a NiMH battery, or may include an external power supply that directly supplies power to the wearable electronic device 100, for example, an AC adapter.

In this embodiment of the present invention, the power supply 180 may further include a power management system, a charging system, a power failure detection circuit, a power converter or inverter, a power status indicator (for example, a light emitting diode), and any other components related to electric energy generation, management, and distribution of the electronic device.

Optionally, in an embodiment of the present invention, the input unit 140 is further configured to receive the second operation instruction entered by the user, and the second operation instruction is used to indicate that the first information is correct.

Specifically, in this embodiment of the present invention, after the processor 110 of the wearable electronic device 100 switches the first operating system to the second operating system, and the communications unit 130 receives, by using the first application supported by the second operating system, the first information sent by the intelligent terminal, the processor 110 determines, according to the second operation instruction that is used to indicate that the first information is correct and that is received by the input unit 140, that the first information is correct. The first information includes the transaction data for completing online payment. Further, the data processing unit 150 performs, by using the second operating system, encryption or signature processing on the first information that is determined to be correct by the processor 110, to obtain the second information. That is, the first information received by the communications unit 130 may be presented on the wearable electronic device 100. This may ensure authenticity of the first information.

If the transaction data is tampered with by malicious software on the intelligent terminal, tampered data may be presented on the display unit 160 of the wearable electronic device 100. If the user finds that the transaction data is incorrect, the user may abandon a payment operation.

According to the present invention, the communications unit 130 is configured to establish a communication connection to the intelligent terminal in a wireless access mode, and the processor 110 is further configured to determine, according to a service request instruction that is sent by the intelligent terminal and received by the communications unit 130, to run the first application supported by the second operating system, and the communications unit 130 is configured to send, to the intelligent terminal, a response message indicating that the first application has already been run.

Specifically, according to the present invention, after the processor 110 of the wearable electronic device 100 switches the first operating system to the second operating system, the communications unit 130 establishes the communication connection to the intelligent terminal in a wireless access mode. For example, after receiving a search message that is broadcast by the intelligent terminal according to a specified time period and a specified frequency, the wearable electronic device 100 sends a search response message to the intelligent terminal, and the search response message carries a Bluetooth address and clock information of the Bluetooth module of the wearable electronic device 100. When the intelligent terminal receives the search response message of the wearable electronic device 100, the user may tap on a screen of the intelligent terminal to establish a connection, and the intelligent terminal sends a Bluetooth address and a Bluetooth clock of the intelligent terminal to the wearable electronic device 100, so that the clock of the wearable electronic device 100 is synchronized with that of the intelligent terminal. A Bluetooth communications link between the intelligent terminal and the wearable electronic device 100 is established, and the intelligent terminal randomly generates a PIN number, and sends the PIN number to the wearable electronic device 100. After receiving the PIN number, the wearable electronic device 100 determines whether PIN numbers of the intelligent terminal and the wearable electronic device 100 are consistent, to verify connection validity. When the user selects "accept" on the wearable electronic device 100, a Bluetooth connection is established between the intelligent terminal and the wearable electronic device 100, and data interaction may be performed between the intelligent terminal and the wearable electronic device 100 by using Bluetooth.

After the intelligent terminal establishes the Bluetooth connection to the wearable electronic device 100, the intelligent terminal sends a service request command to the wearable electronic device 100 to obtain a corresponding service. The processor 110 of the wearable electronic device 100 determines, according to the service request instruction that is sent by the intelligent terminal and received by the communications unit 130, to run the first application supported by the second operating system, and the communications unit 130 sends, to the intelligent terminal, the response message indicating that the first application has already been run.

For example, the intelligent terminal sends a service request command to the wearable electronic device 100 to obtain a service of the Industrial and Commercial Bank of China, and according to the service request instruction that is sent by the intelligent terminal and received by the communications unit 130, the processor 110 of the wearable electronic device 100 determines and runs an application of the Industrial and Commercial Bank of China that is supported by the second operating system. The communications unit 130 sends, to the intelligent terminal, a response message indicating that the application of the Industrial and Commercial Bank of China has already been run.

It should be understood that, in this embodiment of the present invention, the intelligent terminal may further establish a WiFi connection to the wearable electronic device 100. The second operating system may support multiple payment applications. Therefore, the wearable electronic device 100 may determine, from the multiple payment applications and according to the service request instruction sent by the intelligent terminal, an application corresponding to the instruction, and activate the application, so as to receive the first information that includes the transaction data and that is sent by the intelligent terminal.

Optionally, in another embodiment of the present invention, the input unit 140 may be further configured to receive the first operation instruction entered by the user, and the first operation instruction is used to switch the first operating system to the second operating system. Specifically, in this embodiment of the present invention, before the processor 110 of the wearable electronic device 100 switches, according to the first operation instruction that is entered by the user and received by the input unit 140, the frequently used first operating system to the second operating system having the security feature, the input unit 140 may receive the first operation instruction that is used to instruct to switch the first operating system to the second operating system.

It should be understood that, in this embodiment of the present invention, the first operation instruction and the second operation instruction may be operation instructions entered in any one of the following manners: voice input, fingerprint input, and keyboard input, that is, may be any one type of: voice instructions, fingerprint instructions, or keyboard instructions.

It should further be understood that, in this embodiment of the present invention, the input unit 140 may be a touch panel, or may be another human-computer interaction interface such as a substantive input key or a microphone, or may be another external information collection apparatus such as a camera. This embodiment of the present invention sets no limitation thereto.

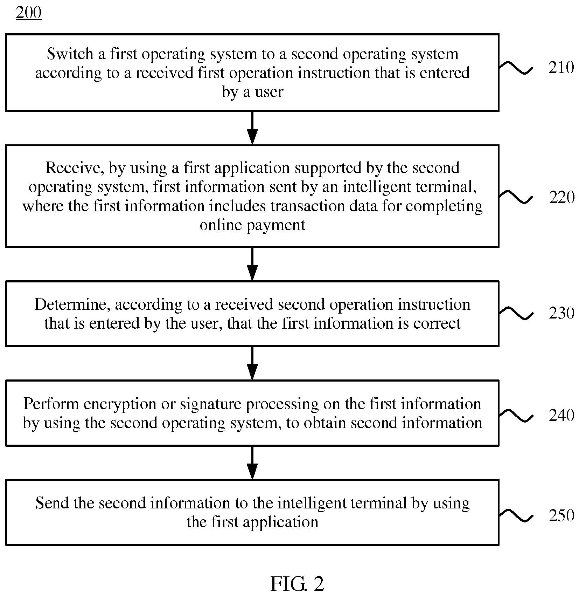

The wearable electronic device according to the embodiment of the present invention is described above in detail with reference to FIG 1, and data processing methods according to embodiments of the present invention are described below in detail with reference to FIG 2 to FIG 6.

FIG 2 is a schematic flowchart of a data processing method 200 according to an embodiment of the present invention. The method 200 shown in FIG 2 may be executed by a wearable electronic device, and the method 200 includes the following steps.

210. Switch a first operating system to a second operating system according to a received first operation instruction that is entered by a user.

220. Receive, by using a first application supported by the second operating system, first information sent by an intelligent terminal, where the first information includes transaction data for completing online payment.

230. Determine, according to a received second operation instruction that is entered by the user, that the first information is correct.

240. Perform encryption or signature processing on the first information by using the second operating system, to obtain second information.

250. Send the second information to the intelligent terminal by using the first application.

Specifically, in this embodiment of the present invention, after the frequently used first operating system such as an Android system is switched, according to the received first operation instruction that is entered by the user, to the second operating system having a security feature, the first information sent by the intelligent terminal is received by using the first application supported by the second operating system, and the first information includes the transaction data for completing online payment. It is determined, according to the received second operation instruction that is entered by the user, that the received first information is correct, and then encryption or signature processing is performed on the first information by using the second operating system, to obtain the second information. For example, the second operating system of the wearable electronic device may store unique key information, to ensure that only information that is processed by using the key may be accepted by a payment organization. The second operating system of the wearable electronic device may store a corresponding certificate and key of the user in the payment organization, and the certificate of the user is also stored on a platform side of the payment organization, so that it may be ensured, by using a unique correspondence between the certificate and the key, that a transaction is completed by an entity (the wearable electronic device) having the key. Finally, the second information obtained by means of encryption or signature processing is sent to the intelligent terminal by using the first application, so that the intelligent terminal obtains the second information to complete online payment.

Therefore, according to the data processing method provided in this embodiment of the present invention, encryption or signature processing is performed, by using a second operating system of a wearable electronic device, on first information that is used to complete online payment and sent by an intelligent terminal, to obtain second information, and the second information is fed back to the intelligent terminal, so that the intelligent terminal obtains the second information to complete the online payment, thereby resolving a security problem of online payment performed by a user by using an intelligent terminal.

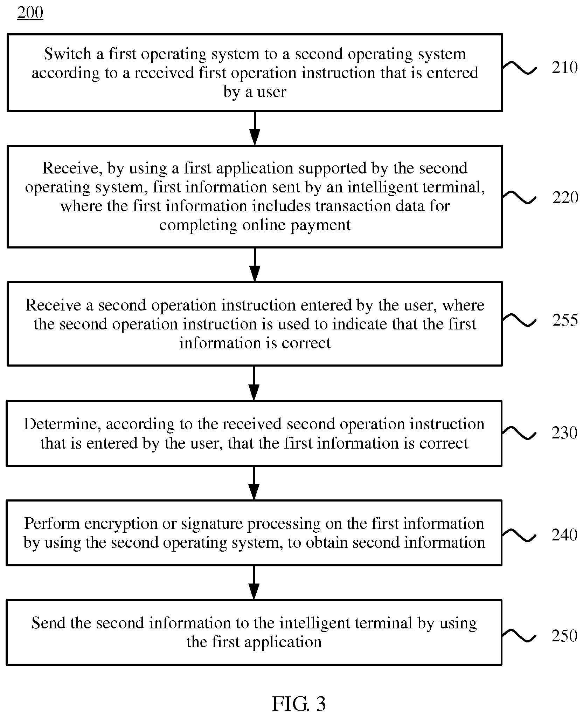

Optionally, in an embodiment of the present invention, as shown in FIG 3, before 230, the method 200 further includes the following step:

255. Receive the second operation instruction entered by the user, where the second operation instruction is used to indicate that the first information is correct.

Specifically, in this embodiment of the present invention, after the first information sent by the intelligent terminal is received by using the first application supported by the second operating system, the second operation instruction that is entered by the user and used to indicate that the first information is correct may be received, and the first information includes the transaction data for completing online payment. Then, it is determined, according to the received second operation instruction, that the first information is correct. Further, encryption or signature processing is performed on the first information by using the second operating system, to obtain the second information. That is, the received first information may be presented on the wearable electronic device. This may ensure authenticity of the first information. If the transaction data is tampered with by malicious software on the intelligent terminal, tampered data may be presented on a display of the wearable electronic device. If the user finds that the transaction data is incorrect, the user may abandon a payment operation.

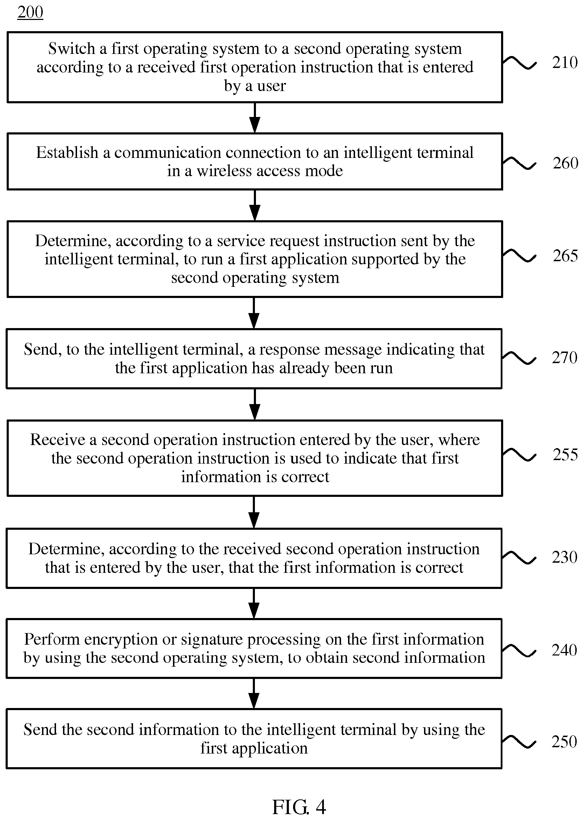

According to the present invention, as shown in FIG 4, before 220, and after 210, the method 200 further includes the following steps:

260. Establish a communication connection to the intelligent terminal in a wireless access mode.

265. Determine, according to a service request instruction sent by the intelligent terminal, to run the first application supported by the second operating system.

270. Send, to the intelligent terminal, a response message indicating that the first application has already been run.

Specifically, in this embodiment of the present invention, after the frequently used first operating system is switched, according to the received first operation instruction that is entered by the user, to the second operating system having the security feature, the communication connection to the intelligent terminal may be established in a wireless access mode. After the intelligent terminal establishes a Bluetooth connection to the wearable electronic device, the intelligent terminal sends a service request command to the wearable electronic device to obtain a corresponding service. The wearable electronic device determines, according to the service request instruction sent by the intelligent terminal, to run the first application supported by the second operating system, and sends, to the intelligent terminal, the response message indicating that the first application has already been run.

For example, the intelligent terminal sends a service request command to the wearable electronic device to obtain a service of the Industrial and Commercial Bank of China, and according to the service request instruction sent by the intelligent terminal, the wearable electronic device determines and runs an application of the Industrial and Commercial Bank of China that is supported by the second operating system, and sends, to the intelligent terminal, a response message indicating that the application of the Industrial and Commercial Bank of China has already been run.

It should be understood that, in this embodiment of the present invention, the intelligent terminal may further establish a WiFi connection to the wearable electronic device. The second operating system may support multiple payment applications. Therefore, the wearable electronic device may determine, from the multiple payment applications and according to the service request instruction sent by the intelligent terminal, an application corresponding to the instruction, and activate the application, so as to receive the first information that includes the transaction data and that is sent by the intelligent terminal.

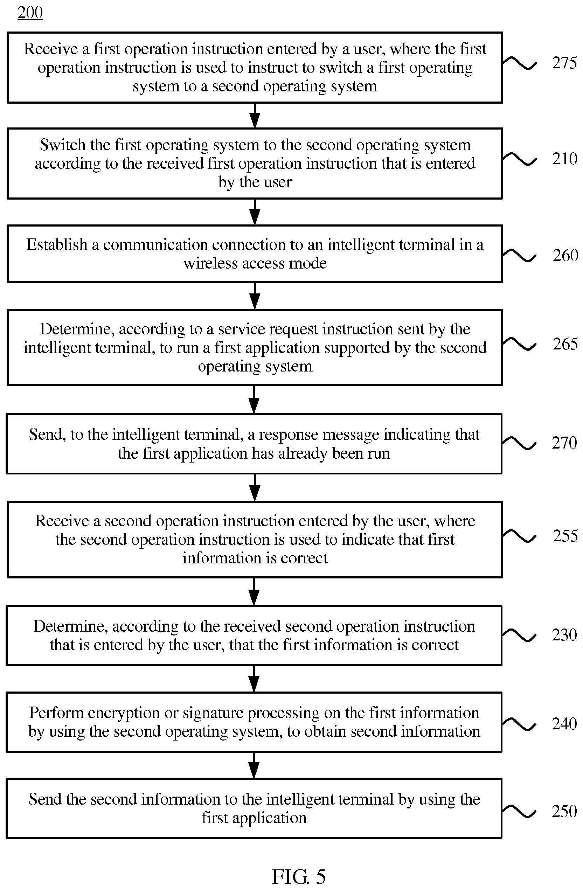

Optionally, in another embodiment of the present invention, as shown in FIG 5, before 210, the method 200 further includes the following step:

275. Receive the first operation instruction entered by the user, where the first operation instruction is used to instruct to switch the first operating system to the second operating system.

Specifically, in this embodiment of the present invention, before the frequently used first operating system is switched, according to the received first operation instruction, to the second operating system having the security feature, the first operation instruction used to instruct to switch the first operating system to the second operating system may be received.

It should be understood that, in this embodiment of the present invention, the first operation instruction and the second operation instruction may be any one type of: voice instructions, fingerprint instructions, or keyboard instructions.

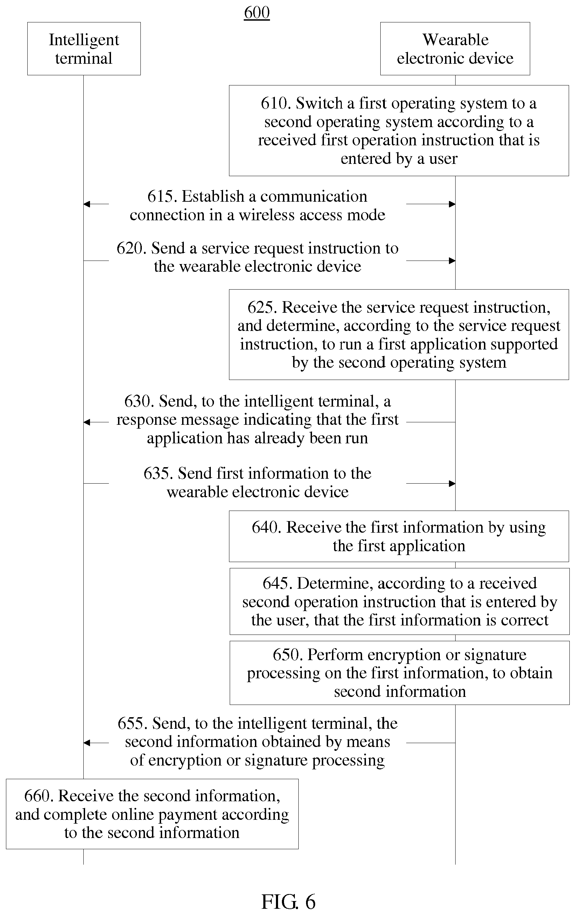

The technical solutions of the embodiments of the present invention are described below in detail with reference to a schematic interaction diagram, shown in FIG 6, of a data processing method 600 according to an embodiment of the present invention. The method 600 shown in FIG 6 includes the following steps.

610. A wearable electronic device switches a first operating system to a second operating system according to a received first operation instruction that is entered by a user.

Specifically, in this embodiment of the present invention, when determining that an online payment service needs to be performed, the user may enter the first operation instruction into the wearable electronic device, for example, enter an operation instruction into the wearable electronic device in a voice, keyboard, or fingerprint manner. The first operation instruction instructs the wearable electronic device to switch the frequently used first operating system such as an Android system to the second operating system having a security feature.

615. An intelligent terminal establishes a communication connection to the wearable electronic device in a wireless access mode.

Specifically, in this embodiment of the present invention, the intelligent terminal may establish the communication connection to the wearable electronic device in a Bluetooth or WiFi manner.

620. The intelligent terminal sends a service request instruction to the wearable electronic device, and the service request instruction is used to instruct the wearable electronic device to provide a related service of the Industrial and Commercial Bank of China.

625. The wearable electronic device receives the service request instruction sent by the intelligent terminal, and according to the service request instruction, determines and runs an application of the Industrial and Commercial Bank of China that is supported by the second operating system, so as to provide a related service of the Industrial and Commercial Bank of China.

630. The wearable electronic device sends, to the intelligent terminal, a response message indicating that the application of the Industrial and Commercial Bank of China has already been run, and the response message is used to indicate that the wearable electronic device may provide the related service of the Industrial and Commercial Bank of China.

635. After receiving the response message, the intelligent terminal sends first information to the wearable electronic device, where the first information includes transaction data for completing online payment.

640. The wearable electronic device receives, by using a first application supported by the second operating system, the first information sent by the intelligent terminal.

645. The wearable electronic device determines, according to a received second operation instruction that is entered by the user, that the first information is correct.

Specifically, in this embodiment of the present invention, the wearable electronic device receives, by using the application of the Industrial and Commercial Bank of China, the first information sent by the intelligent terminal, the first information includes the transaction data for completing online payment, and the first information may be displayed on a display of the wearable electronic device. The user may enter the second operation instruction into the wearable electronic device, for example, may enter the second operation instruction in a voice, key, or fingerprint manner, to determine that the first information is correct. If the user finds that the transaction data included in the first information is incorrect, the user may abandon a payment operation to avoid a loss.

650. The wearable electronic device performs encryption or signature processing on the received first information by using the second operating system, to obtain second information.

655. The wearable electronic device sends, to the intelligent terminal, the second information obtained by means of encryption or signature processing.

660. The intelligent terminal receives the second information sent by the wearable electronic device, and completes online payment according to the second information.

Specifically, in this embodiment of the present invention, the wearable electronic device may perform encryption or signature processing on the received first information by using the second operating system having the security feature, to obtain the second information, so as to ensure that only information that is processed by using a key stored in the second operating system may be accepted by a payment organization. The wearable electronic device sends, to the intelligent terminal, the second information obtained by means of encryption or signature processing, and the intelligent terminal receives the second information and sends the second information to a platform of the payment organization. The payment organization receives the second information, completes a corresponding payment transaction after verifying that the second information is correct, and may send, to the intelligent terminal, a feedback message that carries information indicating that the transaction is completed.

Therefore, according to the data processing method provided in this embodiment of the present invention, encryption or signature processing is performed, by using a second operating system of a wearable electronic device, on first information that is used to complete online payment and sent by an intelligent terminal, to obtain second information, and the second information is fed back to the intelligent terminal, so that the intelligent terminal obtains the second information to complete the online payment, thereby resolving a security problem of online payment performed by a user by using an intelligent terminal.

It should be understood that, in the embodiments of the present invention, the method 200 according to the embodiments of the present invention may be correspondingly executed by the wearable electronic device 100 according to the embodiments of the present invention, and the corresponding procedures of the methods in FIG 2 to FIG 6 are separately implemented by using the foregoing and other operations and/or functions of the modules of the wearable electronic device 100. For brevity, details are not described herein.

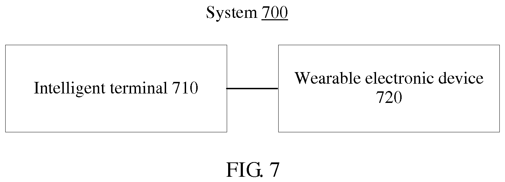

The data processing methods according to the embodiments of the present invention are described above in detail with reference to FIG 2 to FIG 6, and a data processing system according to an embodiment of the present invention is described below in detail with reference to FIG 7.

FIG 7 is a schematic diagram of a data processing system 700 according to an embodiment of the present invention. The system 700 shown in FIG 7 includes an intelligent terminal 710 and a wearable electronic device 720.

The intelligent terminal 710 is configured to send first information to the wearable electronic device 720, where the first information includes transaction data for completing online payment.

The wearable electronic device 720 is configured to: switch the first operating system to the second operating system according to a received first operation instruction that is entered by a user; receive, by using a first application supported by the second operating system, the first information sent by the intelligent terminal 710; when determining that the first information is correct, perform encryption or signature processing on the first information, to obtain second information; and send the second information to the intelligent terminal 710.

Therefore, according to the data processing system provided in this embodiment of the present invention, encryption or signature processing is performed, by using a second operating system of a wearable electronic device, on first information that is used to complete online payment and sent by an intelligent terminal, to obtain second information, and the second information is fed back to the intelligent terminal, so that the intelligent terminal obtains the second information to complete the online payment, thereby resolving a security problem of online payment performed by a user by using an intelligent terminal.

It should be understood that, in this embodiment of the present invention, the wearable electronic device 720 may correspond to the wearable electronic device 100 according to the embodiment of the present invention. For brevity, details are not described herein.

Optionally, in an embodiment of the present invention, the intelligent terminal 710 may be further configured to: establish a communication connection to the wearable electronic device 720 in a wireless access mode, and send a service request instruction to the wearable electronic device 720, where the service request instruction is used to instruct the wearable electronic device 720 to determine to run the first application supported by the second operating system; and
the wearable electronic device 720 is further configured to: receive the service request instruction sent by the intelligent terminal 710; determine, according to the service request instruction, to run the first application supported by the second operating system; and send, to the intelligent terminal 710, a response message indicating that the first application has already been run.

Optionally, in another embodiment of the present invention, the wearable electronic device 720 is further configured to: receive a second operation instruction entered by the user, and determine, according to the second operation instruction, that the first information is correct, where the second operation instruction is used to indicate that the first information is correct.

It should be understood that, in this embodiment of the present invention, the first operation instruction and the second operation instruction are any one type of: voice instructions, fingerprint instructions, or keyboard instructions. This embodiment of the present invention sets no limitation thereto.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on multiple network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

## Claims

1. A wearable electronic device (100), comprising:
a processor (110);
a memory (120);
a communications unit (130);
an input unit (140); and
a data processing unit (150), wherein
the memory (120) is configured to store software programs and modules of a first operating system and a second operating system;
the processor (110) is configured to switch the first operating system to the second operating system according to a first operation instruction that is entered by a user and received by the input unit (140);
wherein the communications unit (130) is configured to establish a communication connection to an intelligent terminal in a wireless access mode, after the first operating system is switched to the second operating system,
wherein the processor (110) is further configured to determine, according to a service request instruction that is sent by the intelligent terminal and received by the communications unit (130), to run a first application supported by the second operating system; and
the communications unit (130) is further configured to send, to the intelligent terminal, a response message indicating that the first application has already been run,
the communications unit (130) is configured to receive, by using the first application supported by the second operating system, first information sent by the intelligent terminal, wherein the first information comprises transaction data for completing online payment;
the processor (110) is further configured to determine, according to a second operation instruction that is entered by the user and received by the input unit, that the first information received by the communications unit (130) is correct;
the data processing unit (150) is configured to perform, by using the second operating system, encryption or signature processing on the first information that is determined to be correct by the processor (110), to obtain second information; and

2. The wearable electronic device (100) according to claim 1, wherein the input unit (140) is further configured to receive the second operation instruction entered by the user, and the second operation instruction is used to indicate that the first information is correct.

3. The wearable electronic device (100) according to claim 1 or claim 2, wherein the first operation instruction is used to switch the first operating system to the second operating system.

4. The wearable electronic device (100) according to any one of claims 1 to 3, wherein the first operation instruction and the second operation instruction are any one type of: voice instructions, fingerprint instructions, or keyboard instructions.

5. A data processing method (200), executed by a wearable device according to any of claims 1-4, comprising:
switching (210) a first operating system to a second operating system according to a received first operation instruction that is entered by a user;
receiving, by using a first application supported by the second operating system, first information (220) sent by an intelligent terminal, wherein the first information comprises transaction data for completing online payment;
determining (230), according to a received second operation instruction that is entered by the user, that the first information is correct;
performing (240) encryption or signature processing on the first information by using the second operating system, to obtain second information; and
sending (250) the second information to the intelligent terminal by using the first application, so that the intelligent terminal obtains the second information to complete online payment,
wherein before the receiving, by using a first application supported by the second operating system, first information sent by an intelligent terminal, the method further comprises:
establishing (260) a communication connection (260) to the intelligent terminal in a wireless access mode;
determining (265), according to a service request instruction sent by the intelligent terminal, to run the first application supported by the second operating system (265); and
sending (270), to the intelligent terminal, a response message indicating that the first application has already been run (270),
wherein the first operating system and the second operating system cannot be run at the same time.

6. The method (200) according to claim 5, wherein before the determining (230), according to a received second operation instruction that is entered by the user, that the first information is correct, the method further comprises:
receiving the second operation instruction (255), wherein the second operation instruction is used to indicate that the first information is correct.

7. The method according to claim 5 or claim 6, wherein before the switching a first operating system to a second operating system according to a received first operation instruction that is entered by a user, the method further comprises:
receiving the first operation instruction entered by the user, wherein the first operation instruction is used to switch the first operating system to the second operating system (275).

8. The method according to any one of claims 5 to 7, wherein the first operation instruction and the second operation instruction are any one type of: voice instructions, fingerprint instructions, or keyboard instructions.

9. A data processing system (700), comprising an intelligent terminal (710) and a wearable electronic device (720) according to the wearable device of any of claims 1-4, wherein
the intelligent terminal (710) is configured to send first information to the wearable electronic device, wherein the first information comprises transaction data for completing online payment; and
the wearable electronic device (720) is configured to: switch a first operating system to a second operating system according to a received first operation instruction that is entered by a user;
wherein the intelligent terminal (710) is further configured to establish a communication connection to the wearable electronic device (720) in a wireless access mode, after the first operating system is switched to the second operating system; send a service request instruction to the wearable electronic device (720), wherein the service request instruction is used to instruct the wearable electronic device (720) to determine to run the first application supported by the second operating system; and
the wearable electronic device (720) is further configured to: receive the service request instruction; determine, according to the service request instruction, to run a first application supported by the second operating system; and send, to the intelligent terminal (710), a response message indicating that the first application has already been run,
wherein the wearable electronic device (720) is further configured to receive, by using the first application supported by the second operating system, the first information sent by the intelligent terminal; when determining that the first information is correct, perform encryption or signature processing on the first information, to obtain second information; and send the second information to the intelligent terminal, so that the intelligent terminal obtains the second information to complete online payment,
wherein the first operating system and the second operating system cannot be run at the same time.

10. The system (700) according to claim 9, wherein
the wearable electronic device (720) is further configured to: receive a second operation instruction entered by the user, and determine, according to the second operation instruction, that the first information is correct, wherein the second operation instruction is used to indicate that the first information is correct.

11. The system (700) according to claim 9 or claim 10, wherein the first operation instruction and the second operation instruction are any one type of: voice instructions, fingerprint instructions, or keyboard instructions.

12. A computer-readable storage medium including instructions, which, when executed by a wearable device according to any of claims 1-4, cause the wearable device to carry out the method according to any one of claims 5-8.

13. A computer program product including instructions, which, when executed by a wearable device according to any of claims 1-4 cause the wearable device to carry out the method according to any one of claims 5-8.

## Patentansprüche

1. Am Körper tragbare elektronische Vorrichtung (100), umfassend:
einen Prozessor (110);
einen Speicher (120);
eine Kommunikationseinheit (130);
eine Eingabeeinheit (140); und
eine Datenverarbeitungseinheit (150), wobei
der Speicher (120) dazu konfiguriert ist, Softwareprogramme und Module eines ersten Betriebssystems und eines zweiten Betriebssystems zu speichern;
der Prozessor (110) dazu konfiguriert ist, das erste Betriebssystem gemäß einer ersten Bedienungsanweisung, die durch einen Benutzer eingegeben und durch die Eingabeeinheit (140) empfangen wird, auf das zweite Betriebssystem umzuschalten;
wobei die Kommunikationseinheit (130) dazu konfiguriert ist, eine Kommunikationsverbindung zu einem intelligenten Endgerät in einem drahtlosen Zugriffsmodus aufzubauen, nachdem das erste Betriebssystem auf das zweite Betriebssystem umgeschaltet wird, wobei der Prozessor (110) ferner dazu konfiguriert ist, gemäß einer Dienstanforderungsanweisung, die durch das intelligente Endgerät gesendet und durch die Kommunikationseinheit (130) empfangen wird, zu bestimmen, eine erste Anwendung, die durch das zweite Betriebssystem unterstützt wird, auszuführen; und
die Kommunikationseinheit (130) ferner dazu konfiguriert ist, an das intelligente Endgerät eine Antwortnachricht zu senden, die angibt, dass die erste Anwendung bereits ausgeführt worden ist,
die Kommunikationseinheit (130) dazu konfiguriert ist, unter Verwendung der ersten Anwendung, die durch das zweite Betriebssystem unterstützt wird, erste Informationen, die durch das intelligente Endgerät gesendet werden, zu empfangen, wobei die ersten Informationen Transaktionsdaten zum Abschließen einer Online-Zahlung umfassen;
der Prozessor (110) ferner dazu konfiguriert ist, gemäß einer zweiten Bedienungsanweisung, die durch den Benutzer eingegeben und durch die Eingabeeinheit empfangen wird, zu bestimmen, dass die ersten Informationen, die durch die Kommunikationseinheit (130) empfangen werden, richtig sind;
die Datenverarbeitungseinheit (150) dazu konfiguriert ist, unter Verwendung des zweiten Betriebssystems eine Verschlüsselungs- oder Signaturverarbeitung an den ersten Informationen, die durch den Prozessor (110) als richtig bestimmt werden, durchzuführen, um zweite Informationen zu erlangen; und
die Kommunikationseinheit (130) ferner dazu konfiguriert ist, unter Verwendung der ersten Anwendung die zweiten Informationen, die durch die Datenverarbeitungseinheit (150) erlangt werden, an das intelligente Endgerät zu senden, sodass das intelligente Endgerät die zweiten Informationen erlangt, um die Online-Zahlung abzuschließen,
wobei das erste Betriebssystem und das zweite Betriebssystem nicht gleichzeitig ausgeführt werden können.

2. Am Körper tragbare elektronische Vorrichtung (100) nach Anspruch 1, wobei die Eingabeeinheit (140) ferner dazu konfiguriert ist, die zweite Bedienungsanweisung, die durch den Benutzer eingegeben wird, zu empfangen, und die zweite Bedienungsanweisung dazu verwendet wird, anzugeben, dass die ersten Informationen richtig sind.

3. Am Körper tragbare elektronische Vorrichtung (100) nach Anspruch 1 oder Anspruch 2, wobei die erste Bedienungsanweisung dazu verwendet wird, das erste Betriebssystem auf das zweite Betriebssystem umzuschalten.

4. Am Körper tragbare elektronische Vorrichtung (100) nach einem der Ansprüche 1 bis 3, wobei die erste Bedienungsanweisung und die zweite Bedienungsanweisung eine beliebige Art von Folgendem sind: Sprachanweisungen, Fingerabdruckanweisungen oder Tastaturanweisungen.

5. Datenverarbeitungsverfahren (200), das durch eine am Körper tragbare Vorrichtung nach einem der Ansprüche 1-4 ausgeführt wird, umfassend:
Umschalten (210) eines ersten Betriebssystems auf ein zweites Betriebssystem gemäß einer empfangenen ersten Bedienungsanweisung, die durch einen Benutzer eingegeben wird;
Empfangen, unter Verwendung einer ersten Anwendung, die durch das zweite Betriebssystem unterstützt wird, erster Informationen (220), die durch ein intelligentes Endgerät gesendet werden, wobei die ersten Informationen Transaktionsdaten zum Abschließen einer Online-Zahlung umfassen;
Bestimmen (230), gemäß einer empfangenen zweiten Bedienungsanweisung, die durch den Benutzer eingegeben wird, dass die ersten Informationen richtig sind;
Durchführen (240) einer Verschlüsselungs- oder Signaturverarbeitung an den ersten Informationen unter Verwendung des zweiten Betriebssystems, um zweite Informationen zu erlangen; und
Senden (250) der zweiten Informationen an das intelligente Endgerät unter Verwendung der ersten Anwendung, sodass das intelligente Endgerät die zweiten Informationen erlangt, um die Online-Zahlung abzuschließen,
wobei das Verfahren vor dem Empfangen, unter Verwendung einer ersten Anwendung, die durch das zweite Betriebssystem unterstützt wird, erster Informationen, die durch ein intelligentes Endgerät gesendet werden, ferner Folgendes umfasst:
Herstellen (260) einer Kommunikationsverbindung (260) zu dem intelligenten Endgerät in einem drahtlosen Zugriffsmodus;
Bestimmen (265), gemäß einer Dienstanforderungsanweisung, die durch das intelligente Endgerät gesendet wird, um die erste Anwendung, die durch das zweite Betriebssystem (265) unterstützt wird, auszuführen; und
Senden (270), an das intelligente Endgerät, einer Antwortnachricht, die angibt, dass die erste Anwendung bereits ausgeführt worden ist (270),
wobei das erste Betriebssystem und das zweite Betriebssystem nicht gleichzeitig ausgeführt werden können.

6. Verfahren (200) nach Anspruch 5, wobei das Verfahren vor dem Bestimmen (230), gemäß einer empfangenen zweiten Bedienungsanweisung, die durch den Benutzer eingegeben wird, dass die ersten Informationen richtig sind, ferner Folgendes umfasst:
Empfangen der zweiten Bedienungsanweisung (255), wobei die zweite Bedienungsanweisung dazu verwendet wird, anzugeben, dass die ersten Informationen richtig sind.

7. Verfahren nach Anspruch 5 oder Anspruch 6, wobei das Verfahren vor dem Umschalten eines ersten Betriebssystems auf ein zweites Betriebssystem gemäß einer empfangenen ersten Bedienungsanweisung, die durch einen Benutzer eingegeben wird, ferner Folgendes umfasst:
Empfangen der ersten Bedienungsanweisung, die durch den Benutzer eingegeben wird, wobei die erste Bedienungsanweisung dazu verwendet wird, das erste Betriebssystem auf das zweite Betriebssystem umzuschalten (275).

8. Verfahren nach einem der Ansprüche 5 bis 7, wobei die erste Bedienungsanweisung und die zweite Bedienungsanweisung eine beliebige Art von Folgendem sind: Sprachanweisungen, Fingerabdruckanweisungen oder Tastaturanweisungen.

9. Datenverarbeitungssystem (700), umfassend ein intelligentes Endgerät (710) und eine am Körper tragbare elektronische Vorrichtung (720) gemäß der am Körper tragbaren Vorrichtung nach einem der Ansprüche 1-4, wobei
das intelligente Endgerät (710) dazu konfiguriert ist, erste Informationen an die am Körper tragbare elektronische Vorrichtung zu senden, wobei die ersten Informationen Transaktionsdaten zum Abschließen einer Online-Zahlung umfassen; und
die am Körper tragbare elektronische Vorrichtung (720) zu Folgendem konfiguriert ist: Umschalten eines ersten Betriebssystems auf ein zweites Betriebssystem gemäß einer empfangenen ersten Bedienungsanweisung, die durch einen Benutzer eingegeben wird;
wobei das intelligente Endgerät (710) ferner dazu konfiguriert ist, eine Kommunikationsverbindung mit der am Körper tragbaren elektronischen Vorrichtung (720) in einem drahtlosen Zugriffsmodus herzustellen, nachdem das erste Betriebssystem auf das zweite Betriebssystem umgeschaltet wird; eine Dienstanforderungsanweisung an die tragbare elektronische Vorrichtung (720) zu senden, wobei die Dienstanforderungsanweisung dazu verwendet wird, die am Körper tragbare elektronische Vorrichtung (720) anzuweisen, zu bestimmen, die erste Anwendung, die durch das zweite Betriebssystem unterstützt wird, auszuführen; und
die am Körper tragbare elektronische Vorrichtung (720) ferner zu Folgendem konfiguriert ist: Empfangen der Dienstanforderungsanweisung; Bestimmen, gemäß der Dienstanforderungsanweisung, eine erste Anwendung, die durch das zweite Betriebssystem unterstützt wird, auszuführen; und Senden, an das intelligente Endgerät (710), einer Antwortnachricht, die angibt, dass die erste Anwendung bereits ausgeführt worden ist, wobei die am Körper tragbare elektronische Vorrichtung (720) ferner dazu konfiguriert ist, unter Verwendung der ersten Anwendung, die durch das zweite Betriebssystem unterstützt wird, die ersten Informationen, die durch das intelligente Endgerät gesendet werden, zu empfangen; beim Bestimmen, dass die ersten Informationen richtig sind, eine Verschlüsselungs- oder Signaturverarbeitung an den ersten Informationen durchzuführen, um zweite Informationen zu erlangen; und die zweiten Informationen an das intelligente Endgerät zu senden, sodass das intelligente Endgerät die zweiten Informationen erlangt, um die Online-Zahlung abzuschließen,
wobei das erste Betriebssystem und das zweite Betriebssystem nicht gleichzeitig ausgeführt werden können.

10. System (700) nach Anspruch 9, wobei
die am Körper tragbare elektronische Vorrichtung (720) ferner zu Folgendem konfiguriert ist: Empfangen einer zweiten Bedienungsanweisung, die durch den Benutzer eingegeben wird, und Bestimmen, gemäß der zweiten Bedienungsanweisung, dass die ersten Informationen richtig sind, wobei die zweite Bedienungsanweisung dazu verwendet wird, anzugeben, dass die ersten Informationen richtig sind.

11. System (700) nach Anspruch 9 oder Anspruch 10, wobei die erste Bedienungsanweisung und die zweite Bedienungsanweisung eine beliebige Art von Folgendem sind: Sprachanweisungen, Fingerabdruckanweisungen oder Tastaturanweisungen.

12. Computerlesbares Speichermedium, das Anweisungen beinhaltet, die, wenn sie durch eine am Körper tragbare Vorrichtung nach einem der Ansprüche 1-4 ausgeführt werden, die am Körper tragbare Vorrichtung dazu veranlassen, das Verfahren nach einem der Ansprüche 5-8 durchzuführen.

13. Computerprogrammprodukt, das Anweisungen beinhaltet, die, wenn sie durch eine am Körper tragbare Vorrichtung nach einem der Ansprüche 1-4 ausgeführt werden, die am Körper tragbare Vorrichtung dazu veranlassen, das Verfahren nach einem der Ansprüche 5-8 durchzuführen.

## Revendications

1. Dispositif électronique pouvant être porté (100), comprenant :
un processeur (110) ;
une mémoire (120) ;
une unité de communication (130) ;
une unité d'entrée (140) ; et
une unité de traitement de données (150), dans lequel la mémoire (120) est configurée pour stocker des programmes logiciels et des modules d'un premier système d'exploitation et d'un second système d'exploitation ;
le processeur (110) est configuré pour commuter le premier système d'exploitation sur le second système d'exploitation selon une première instruction d'exploitation qui est entrée par un utilisateur et reçue par l'unité d'entrée (140) ;
dans lequel l'unité de communication (130) est configurée pour établir une connexion de communication avec un terminal intelligent dans un mode d'accès sans fil, après commutation du premier système d'exploitation sur le second système d'exploitation,
dans lequel le processeur (110) est également configuré pour déterminer, selon une instruction de demande de service qui est envoyée par le terminal intelligent et reçue par l'unité de communication (130), de lancer une première application prise en charge par le second système d'exploitation ; et
l'unité de communication (130) est également configurée pour envoyer, au terminal intelligent, un message de réponse indiquant que la première application a déjà été lancée,
l'unité de communication (130) est configurée pour recevoir, en utilisant la première application prise en charge par le second système d'exploitation, des premières informations envoyées par le terminal intelligent, dans lequel les premières informations comprennent des données de transaction pour réaliser un paiement en ligne ;
le processeur (110) est également configuré pour déterminer, selon une seconde instruction d'exploitation qui est entrée par l'utilisateur et reçue par l'unité d'entrée, que les premières informations reçues par l'unité de communication (130) sont correctes ;
l'unité de traitement de données (150) est configurée pour effectuer, en utilisant le second système d'exploitation, un traitement de chiffrement ou de signature sur les premières informations qui sont déterminées comme étant correctes par le processeur (110), pour obtenir des secondes informations ; et
l'unité de communication (130) est également configurée pour envoyer, au terminal intelligent en utilisant la première application, les secondes informations obtenues par l'unité de traitement de données (150), de sorte que le terminal intelligent obtient les secondes informations pour réaliser un paiement en ligne,
dans lequel le premier système d'exploitation et le second système d'exploitation ne peuvent pas être lancés en même temps.

2. Dispositif électronique pouvant être porté (100) selon la revendication 1, dans lequel l'unité d'entrée (140) est également configurée pour recevoir la seconde instruction d'exploitation entrée par l'utilisateur, et la seconde instruction d'exploitation est utilisée pour indiquer que les premières informations sont correctes.

3. Dispositif électronique pouvant être porté (100) selon la revendication 1 ou la revendication 2, dans lequel la première instruction d'exploitation est utilisée pour commuter le premier système d'exploitation sur le second système d'exploitation.

4. Dispositif électronique pouvant être porté (100) selon l'une quelconque des revendications 1 à 3, dans lequel la première instruction d'exploitation et la seconde instruction d'exploitation sont d'un type quelconque parmi : des instructions vocales, des instructions d'empreintes digitales ou des instructions de clavier.

5. Procédé de traitement de données (200), exécuté par un dispositif pouvant être porté selon l'une quelconque des revendications 1 à 4, comprenant :
la commutation (210) d'un premier système d'exploitation sur un second système d'exploitation selon une première instruction d'exploitation reçue qui est entrée par un utilisateur ;
la réception, en utilisant une première application prise en charge par le second système d'exploitation, de premières informations (220) envoyées par un terminal intelligent, dans lequel les premières informations comprennent des données de transaction pour réaliser un paiement en ligne ;
la détermination (230), en fonction d'une seconde instruction d'exploitation reçue qui est entrée par l'utilisateur, que les premières informations sont correctes ;
la réalisation (240) d'un traitement de chiffrement ou de signature sur les premières informations en utilisant le second système d'exploitation, pour obtenir des secondes informations ; et
l'envoi (250) des secondes informations au terminal intelligent en utilisant la première application, de sorte que le terminal intelligent obtient les secondes informations pour réaliser un paiement en ligne,
dans lequel avant la réception, en utilisant une première application prise en charge par le second système d'exploitation, de premières informations envoyées par un terminal intelligent, le procédé comprend également :
l'établissement (260) d'une connexion de communication (260) avec le terminal intelligent dans un mode d'accès sans fil ;
la détermination (265), selon une instruction de demande de service envoyée par le terminal intelligent, de lancer la première application prise en charge par le second système d'exploitation (265) ; et
l'envoi (270), au terminal intelligent, d'un message de réponse indiquant que la première application a déjà été lancée (270),
dans lequel le premier système d'exploitation et le second système d'exploitation ne peuvent pas être lancés en même temps**.**

6. Procédé (200) selon la revendication 5, dans lequel avant la détermination (230), selon une seconde instruction d'exploitation reçue qui est entrée par l'utilisateur, que les premières informations sont correctes, le procédé comprend également :
la réception de la seconde instruction d'exploitation (255), dans lequel la seconde instruction d'exploitation est utilisée pour indiquer que les premières informations sont correctes.

7. Procédé selon la revendication 5 ou la revendication 6, dans lequel avant la commutation d'un premier système d'exploitation sur un second système d'exploitation selon une première instruction d'exploitation reçue qui est entrée par un utilisateur, le procédé comprend également :
la réception de la première instruction d'exploitation entrée par l'utilisateur, dans lequel la première instruction d'exploitation est utilisée pour commuter le premier système d'exploitation sur le second système d'exploitation (275).

8. Procédé selon l'une quelconque des revendications 5 à 7, dans lequel la première instruction d'exploitation et la seconde instruction d'exploitation sont d'un type quelconque parmi : des instructions vocales, des instructions d'empreintes digitales ou des instructions de clavier.

9. Système de traitement de données (700), comprenant un terminal intelligent (710) et un dispositif électronique pouvant être porté (720) selon le dispositif pouvant être porté selon l'une quelconque des revendications 1 à 4, dans lequel
le terminal intelligent (710) est configuré pour envoyer des premières informations au dispositif électronique pouvant être porté, dans lequel les premières informations comprennent des données de transaction pour réaliser un paiement en ligne ; et le dispositif électronique pouvant être porté (720) est configuré pour : commuter un premier système d'exploitation sur un second système d'exploitation selon une première instruction d'exploitation reçue qui est entrée par un utilisateur ;
dans lequel le terminal intelligent (710) est également configuré pour établir une connexion de communication avec le dispositif électronique pouvant être porté (720) dans un mode d'accès sans fil, après que le premier système d'exploitation est commuté sur le second système d'exploitation ; envoyer une instruction de demande de service au dispositif électronique pouvant être porté (720), dans lequel l'instruction de demande de service est utilisée pour ordonner au dispositif électronique pouvant être porté (720) de déterminer de lancer la première application prise en charge par le second système d'exploitation ; et
le dispositif électronique pouvant être porté (720) est également configuré pour : recevoir l'instruction de demande de service ; déterminer, selon l'instruction de demande de service, de lancer une première application prise en charge par le second système d'exploitation ; et envoyer, au terminal intelligent (710), un message de réponse indiquant que la première application a déjà été lancée,
dans lequel le dispositif électronique pouvant être porté (720) est également configuré pour recevoir, en utilisant la première application prise en charge par le second système d'exploitation, les premières informations envoyées par le terminal intelligent ; lorsqu'il est déterminé que les premières informations sont correctes, effectuer un traitement de chiffrement ou de signature sur les premières informations, pour obtenir des secondes informations ; et envoyer les secondes informations au terminal intelligent, de sorte que le terminal intelligent obtient les secondes informations pour réaliser un paiement en ligne,
dans lequel le premier système d'exploitation et le second système d'exploitation ne peuvent pas être lancés en même temps**.**

10. Système (700) selon la revendication 9, dans lequel le dispositif électronique pouvant être porté (720) est également configuré pour : recevoir une seconde instruction d'exploitation entrée par l'utilisateur, et déterminer, selon la seconde instruction d'exploitation, que les premières informations sont correctes, dans lequel la seconde instruction d'exploitation est utilisée pour indiquer que les premières informations sont correctes.

11. Système (700) selon la revendication 9 ou la revendication 10, dans lequel la première instruction d'exploitation et la seconde instruction d'exploitation sont d'un type quelconque parmi : des instructions vocales, des instructions d'empreintes digitales ou des instructions de clavier.

12. Support de stockage lisible par ordinateur comportant des instructions qui, lorsqu'elles sont exécutées par un dispositif pouvant être porté selon l'une quelconque des revendications 1 à 4, amènent le dispositif pouvant être porté à mettre en œuvre le procédé selon l'une quelconque des revendications 5 à 8.

13. Produit de programme informatique comportant des instructions qui, lorsqu'elles sont exécutées par un dispositif pouvant être porté selon l'une quelconque des revendications 1 à 4, amènent le dispositif pouvant être porté à mettre en œuvre le procédé selon l'une quelconque des revendications 5 à 8.
